# EUROPÄISCHE PATENTANMELDUNG

(11) **EP 3 933 593 A1**
(43) Veröffentlichungstag der Anmeldung: **05.01.2022**
(21) Anmeldenummer: 20182923.1
(22) Anmeldetag: 29.06.2020
(51) Int. Cl.: G06F 11/07, G06F 11/36

(54) **VERFAHREN UND COMPUTERPROGRAMM ZUM TESTEN EINES TECHNISCHEN SYSTEMS**

(71) Anmelder: Robert Bosch GmbH, 70442 Stuttgart (DE)
(72) Erfinder: Nordmann, Arne, 70499 Stuttgart (DE); Rohatschek, Andreas-Juergen, 73249 Wernau/Neckar (DE); Schweizer, Markus, 71665 Vaihingen/Enz (DE); Gauerhof, Lydia, 71065 Sindelfingen (DE); Munk, Peter, 71272 Renningen (DE); Thaden, Eike Martin, 71272 Renningen (DE)

(57) **Zusammenfassung**

Verfahren (100) zum Testen eines, insbesondere sicherheitsrelevanten, technischen Systems, insbesondere umfassend Software, wobei das System durch ein Modell (200) umfassend wenigstens zwei oder mehr Komponenten (210, 220) repräsentiert wird und eine Annahme (A) einer jeweiligen Komponente (210, 220) bezüglich des sicherheitsrelevanten Systems und eine Garantie (G) einer jeweiligen Komponente (210, 220) an das sicherheitsrelevante System durch einen Sicherheitsvertrag festgelegt sind, dadurch gekennzeichnet, dass in einem Schritt (110) basierend auf wenigstens einer Annahme (A) und basierend auf wenigstens einer Garantie (G) ausführbarer Programm-Code (C) erzeugt wird und in einem weiteren Schritt (120) das sicherheitsrelevante System durch Ausführen des Programm-Codes (C) getestet wird.

## Beschreibung

### Stand der Technik

Die Offenbarung betrifft ein Verfahren und eine Vorrichtung zum Testen eines, insbesondere sicherheitsrelevanten, Systems.

Weiter betrifft die Offenbarung ein Computerprogramm, das in der Vorrichtung und/oder in dem Verfahren zum Testen des Systems verwendet werden kann.

Bei dem System handelt es sich um ein technisches System, insbesondere umfassend Software- und/oder Hardware-Komponenten.

Das Erstellen und/oder Auslegen solcher Systeme erfolgt unter anderem üblicherweise im Rahmen von modellbasiertem System-Engineering. Das System wird, beispielsweise unter Verwendung von UML oder SysML, typischerweise in Form von Komponenten mit Ports und Verbindungen zwischen diesen Ports, modelliert. Das System kann auch als ein hierarchisches Modell, wobei eine Komponente eine oder mehrere weitere Komponenten umfassen kann, modelliert werden.

Die modellbasierte Sicherheitsanalyse, kurz MBSA, nutzt diese Modelle, indem sie dem System eine weitere, sicherheitsorientierte Sicht auf das System hinzufügt. Eine Möglichkeit besteht darin, den Komponenten so genannte Sicherheitsverträge hinzuzufügen. Sicherheitsverträge leiten sich aus der vertragsbasierten Konstruktion ab und sind bereits aus dem Stand der Technik bekannt, beispielsweise aus Warg, F.; Vedder, B.; Skoglund, M. & Söderberg, A.: Safety ADD: A Tool for Safety-Contract Based Design. In: 2014 IEEE International Symposium on Software Reliability Engineering Workshops, 2014, S.527-529.

Sicherheitsverträge dienen der kompositorischen Spezifikation von Sicherheitsanforderungen sicherheitsbezogener Systeme, die der Komponentenstruktur hierarchischer Systemmodelle folgen und mit dieser verknüpft sind. Für jede Komponente spezifiziert ein Sicherheitsvertrag sicherheitsbezogene "Annahmen", die von ihrer direkten Umgebung (z.B. ihrer übergeordneten Komponente) zu erfüllen sind, und entsprechende sicherheitsbezogene "Garantien", die die Komponente ihrerseits bietet.

Das Ziel von Sicherheitsverträgen ist es, Entwickler und Sicherheitsmanager bei der Bewertung der Sicherheit von Systemmodellen zu unterstützen, insbesondere der Fähigkeit der gewählten Komponentenstrukturen, alle Sicherheitsanforderungen zu erfüllen.

### Offenbarung der Erfindung

Eine Ausführung betrifft ein Verfahren zum Testen eines, insbesondere sicherheitsrelevanten, technischen Systems, insbesondere umfassend Software- und/oder Hardware-Komponenten, wobei das System durch ein Modell umfassend wenigstens zwei oder mehr Komponenten repräsentiert wird und eine Annahme einer jeweiligen Komponente bezüglich des sicherheitsrelevanten Systems und eine Garantie einer jeweiligen Komponente an das sicherheitsrelevante System durch einen Sicherheitsvertrag festgelegt sind, dadurch gekennzeichnet, dass in einem Schritt basierend auf wenigstens einer Annahme und basierend auf wenigstens einer Garantie ausführbarer Programm-Code erzeugt wird und in einem weiteren Schritt das sicherheitsrelevante System durch Ausführen des Programm-Codes getestet wird.

Aus dem Stand der Technik ist es bekannt, Programm-Code zum Testen von Funktionen eines Systems während oder nach der Entwicklung des Systems zu generieren und von implementierten Funktionen des Systems abzuleiten. Die Spezifikation kann jedoch von der tatsächlichen Implementierung von Funktionen in einem Endprodukt abweichen. In diesem Fall kann durch Ableiten des Programm-Codes von der Implementierung nicht garantiert werden, dass das Endprodukt tatsächlich die Spezifikationen erfüllt.

Im Gegensatz dazu schlägt das Verfahren gemäß der Offenbarung vor, Programm Code zum Testen des Systems basierend auf in dem Sicherheitsvertrag festgelegten Annahmen und Garantien zu erzeugen. Durch Ausführen des Programm-Codes wird also getestet, ob die im Sicherheitsvertrag festgelegten Annahmen und Garantien bei der Implementierung des Systems umgesetzt wurden.

Die Komponenten umfassen typischerweise Ports, insbesondere Eingänge zum Empfangen von Daten und Ausgänge zum Versenden von Daten. In dem Modell sind weitere Verbindungen zwischen den Ports verschiedener Komponenten modelliert.

Die Annahme einer jeweiligen Komponente ist von der Umgebung der Komponente, beispielsweise eine übergeordnete Komponente, zu erfüllen. Annahmen beziehen sich daher üblicherweise auf am Eingang der Komponente zu empfangende Daten.

Die Garantie einer jeweiligen Komponente ist von der Komponente ihrerseits zu erfüllen. Garantien beziehen sicher daher üblicherweise auf am Ausgang der Komponente zu versendende Daten.

Gemäß einer Ausführungsform ist vorgesehen, dass das Erzeugen des Programm-Codes umfasst: Erzeugen von Programm-Code zum Testen wenigstens einer Funktion wenigstens einer Komponente um zu überprüfen, ob die Garantie der Komponente aus dem Sicherheitsvertrag eingehalten wird.

Gemäß einer Ausführungsform ist vorgesehen, dass das Testen weiter umfasst: Ausführen des Programm-Codes zum Testen der Funktion wenigstens einer Komponente.

Gemäß einer Ausführungsform ist vorgesehen, dass das Erzeugen des Programm-Codes umfasst: Erzeugen von Programm-Code zum Überwachen wenigstens einer Komponente, insbesondere eines Eingangs der Komponente, um zu überprüfen, ob die Annahme der Komponente aus dem Sicherheitsvertrag eingehalten wird.

Gemäß einer Ausführungsform ist vorgesehen, dass das Testen weiter umfasst: Ausführen des Programm-Codes zum Überwachen wenigstens einer Komponente, insbesondere zur Laufzeit des sicherheitsrelevanten Systems, insbesondere während des Betriebs des sicherheitsrelevanten Systems.

Gemäß einer Ausführungsform ist vorgesehen, dass das Erzeugen des Programm-Codes automatisch erfolgt. Wenn die Sicherheitsverträge formalisiert sind, kann das Erzeugen von Programm-Code und damit auch das Testen des Systems automatisch durchgeführt werden.

Die Annahmen und Garantien sind in dem Sicherheitsvertrag beispielsweise natürlich sprachlich formuliert, können aber, beispielsweise unter Verwendung von Texterkennungsverfahren, automatisch in logische Ausdrücke umgewandelt werden. Die logischen Ausdrücke werden dann entsprechenden in Programm-Code umgewandelt. Verkettete Strukturen von Aussagen können insbesondere sukzessive in entsprechende Ausdrücke im Programm-Code umgewandelt werden.

Gemäß einer Ausführungsform ist vorgesehen, dass das Erzeugen des Programm-Codes weiter umfasst: Erzeugen von Programm-Code zum Testen wenigstens einer Funktion des, insbesondere sicherheitsrelevanten, Systems und/oder zum Überwachen des, insbesondere sicherheitsrelevanten, Systems auf Systemebene.

Gemäß einer Ausführungsform ist vorgesehen, dass das Testen weiter umfasst: Ausführen des Programm-Codes zum Testen wenigstens einer Funktion des, insbesondere sicherheitsrelevanten, Systems und/oder zum Überwachen des, insbesondere sicherheitsrelevanten, Systems auf Systemebene.

Gemäß einer Ausführungsform ist vorgesehen, dass das Verfahren weiter umfasst: Erzeugen von ausführbarem Programm-Code basierend auf wenigstens einer der folgenden Systemanforderungen: Sicherheit, Komfort, Homologationsaspekten. Die Systemanforderung sind beispielsweise in Spezifikationsdokumenten natürlich sprachlich formuliert, können aber, beispielsweise unter Verwendung von Texterkennungsverfahren, automatisch in logische Ausdrücke umgewandelt werden. Die logischen Ausdrücke werden dann entsprechenden in Programm-Code umgewandelt. Verkettete Strukturen von Aussagen können insbesondere sukzessive in entsprechende Ausdrücke im Programm-Code umgewandelt werden.

Gemäß einer weiteren Ausführungsform ist vorgesehen, dass durch Anwendung des Verfahrens das System ausgelegt werden kann. Beispielsweise kann analysiert werden, ob eine bestimmte Komponente durch eine andere Komponente, insbesondere mit ähnlicher Funktionalität ersetzt werden kann oder nicht, so dass die Annahmen und Garantien aus dem Sicherheitsvertrag weiterhin erfüllt werden.

Weitere Ausführungsformen betreffen die Anwendung des Verfahrens zum Testen eines Steuergeräts, umfassend Software- und/oder Hardwarekomponenten, beispielsweise für ein Fahr-, Brems-, Lenk-, oder Assistenz-System eines, insbesondere zumindest teilautomatisierten, Fahrzeugs. Das Steuergerät kann durch Anwendung des Verfahrens auf sicherheitskritische Anforderungen getestet werden.

Weitere Ausführungsformen betreffen eine Vorrichtung, wobei die Vorrichtung zum Ausführen eines Verfahrens gemäß den Ausführungsformen ausgebildet ist.

Weitere Ausführungsformen betreffen ein Computerprogramm, umfassend ausführbaren Programm-Code, wobei der Programm-Code auf einem Sicherheitsvertrag zwischen einem sicherheitsrelevanten System und wenigstens einer Komponente des sicherheitsrelevanten Systems, der Sicherheitsvertrag umfassend wenigstens eine Annahme der Komponente bezüglich des sicherheitsrelevanten Systems und/oder wenigstens eine Garantie der Komponente an das sicherheitsrelevante System, basiert.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

In der Zeichnung zeigt:
- Fig. 1: eine schematische Darstellung von Schritten eines Verfahrens zum Testen eines technischen Systems gemäß einer Ausführungsform in einem Flussdiagramm;
- Fig. 2: eine schematische Darstellung eines technischen Systems als Modell, und
- Fig. 3: eine schematische Darstellung von Schritten eines Verfahrens gemäß einer weiteren Ausführungsform in einem Blockdiagramm.

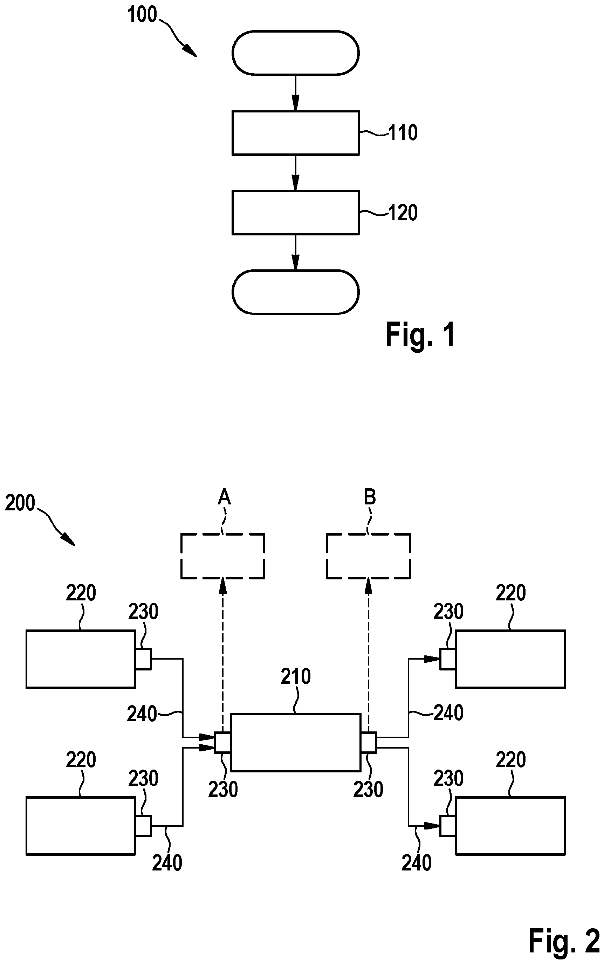

Mit Bezug auf Figur 1 wird im Folgenden ein Verfahren 100 zum Testen eines technischen Systems beschrieben.

Bei dem technischen System handelt es sich um ein sicherheitsrelevantes System, insbesondere umfassend Software- und/oder Hardware-Komponenten.

Das System wird gemäß der dargestellten Ausführungsform durch ein Modell 200, vergleiche Figur 2, repräsentiert.

Das Modell 200 umfasst gemäß der dargestellten Ausführungsform beispielhaft die Komponente 210 und weitere Komponenten 220.

Die Komponenten 210, 220 umfassen Ports 230, insbesondere Eingänge zum Empfangen von Daten und Ausgänge zum Versenden von Daten. Zwischen den Ports 230 der Komponenten 210, 220 sind Verbindungen 240 modelliert.

Weiter umfasst das Modell 200 Sicherheitsverträge, in denen Annahmen A der Komponenten 210, 220 bezüglich des Systems, insbesondere weiterer Komponenten 210, 220 des Systems, und Garantien G der Komponenten 210, 220 an das System, insbesondere an die weiteren Komponenten 210, 220 des Systems festgelegt sind. In Figur 2 sind schematisch die Annahmen A der Komponente 210 gegenüber der Komponenten 220 und die Garantien G der Komponente 210 gegenüber der Komponenten 220 dargestellt.

Bei dem System handelt es sich beispielsweise um ein technisches System eines Fahrzeugs. Die Komponente 210 ist beispielsweise ein Steuergerät oder eine Recheneinheit eines Steuergeräts, insbesondere für den Antrieb des Kraftfahrzeugs. Die Komponenten 220 sind beispielsweise Sensoren, insbesondere zur optischen Erfassung, und/oder Aktoren, insbesondere zum Ansteuern einer Antriebseinheit des Fahrzeugs und/oder einer Lenkeinheit des Fahrzeugs. Die Komponenten 220, insbesondere die Sensoren, übertragen Daten an die Komponente 210, insbesondere das Steuergerät. Die Komponente 210 wiederrum überträgt Daten an die Komponenten 220. Die Annahme A der Komponente 210 ist in diesem Fall beispielsweise, die Annahme, dass die Komponenten 220 zu vorgebbaren Zeiten Daten an die Komponente 210 übertragen. Die Garantie G der Komponente 210 ist in diesem Fall beispielsweise, die Garantie, dass die Komponente 220 zu vorgebbaren Zeiten Daten an die Komponenten 220 überträgt.

Im Folgenden wird wieder mit Bezug auf Figur 1 weiter das Verfahren 100 zum Testen beschrieben.

Gemäß der dargestellten Ausführungsform wird in einem Schritt 110 des Verfahrens 100 basierend den Annahmen und basierend auf den Garantien des Sicherheitsvertrags ausführbarer Programm-Code erzeugt.

Gemäß der dargestellten Ausführungsform wird in einem Schritt 120 des Verfahrens 100 das sicherheitsrelevante System durch Ausführen des Programm-Codes getestet.

Gemäß einer Ausführungsform ist vorgesehen, dass das Erzeugen 110 des Programm-Codes umfasst: Erzeugen von Programm-Code zum Testen wenigstens einer Funktion wenigstens einer Komponente um zu überprüfen, ob die Garantie der Komponente aus dem Sicherheitsvertrag eingehalten wird.

Gemäß einer Ausführungsform ist vorgesehen, dass das Testen 120 weiter umfasst: Ausführen des Programm-Codes zum Testen der Funktion wenigstens einer Komponente.

Gemäß einer Ausführungsform ist vorgesehen, dass das Erzeugen 110 des Programm-Codes umfasst: Erzeugen von Programm-Code zum Überwachen wenigstens einer Komponente, insbesondere eines Eingangs der Komponente, um zu überprüfen, ob die Annahme der Komponente aus dem Sicherheitsvertrag eingehalten wird.

Gemäß einer Ausführungsform ist vorgesehen, dass das Testen 120 weiter umfasst: Ausführen des Programm-Codes zum Überwachen wenigstens einer Komponente, insbesondere zur Laufzeit des sicherheitsrelevanten Systems, insbesondere während des Betriebs des sicherheitsrelevanten Systems.

Gemäß einer Ausführungsform ist vorgesehen, dass das Erzeugen 110 des Programm-Codes automatisch erfolgt. Die Annahmen und Garantien sind in dem Sicherheitsvertrag beispielsweise natürlichsprachlich formuliert, können aber, beispielsweise unter Verwendung von Texterkennungsverfahren, automatisch in logische Ausdrücke umgewandelt werden. Die logischen Ausdrücke werden dann entsprechenden in Programm-Code umgewandelt. Verkettete Strukturen von Aussagen können insbesondere sukzessive in entsprechende Ausdrücke im Programm-Code umgewandelt werden.

Gemäß einer Ausführungsform ist vorgesehen, dass das Erzeugen 110 des Programm-Codes weiter umfasst: Erzeugen von Programm-Code zum Testen wenigstens einer Funktion des, insbesondere sicherheitsrelevanten, Systems und/oder zum Überwachen des, insbesondere sicherheitsrelevanten, Systems auf Systemebene.

Gemäß einer Ausführungsform ist vorgesehen, dass das Testen 120 weiter umfasst: Ausführen des Programm-Codes zum Testen wenigstens einer Funktion des, insbesondere sicherheitsrelevanten, Systems und/oder zum Überwachen des, insbesondere sicherheitsrelevanten, Systems auf Systemebene.

Gemäß einer Ausführungsform ist vorgesehen, dass das Verfahren 100 weiter umfasst: Erzeugen von ausführbarem Programm-Code basierend auf wenigstens einer der folgenden Systemanforderungen: Sicherheit, Komfort, Homologationsaspekten.

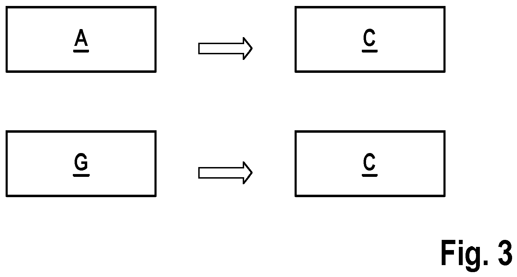

Figur 3 ist eine schematische Darstellung der Annahme A und der Garantie G der Komponente 210. Basierend auf der Annahme A und der Garantie G wird durch das Verfahren 100 ausführbarer Programm-Code C erzeugt.

## Patentansprüche

1. Verfahren (100) zum Testen eines, insbesondere sicherheitsrelevanten, technischen Systems, insbesondere umfassend Software- und/oder Hardwarekomponenten, wobei das System durch ein Modell (200) umfassend wenigstens zwei oder mehr Komponenten (210, 220) repräsentiert wird und eine Annahme (A) einer jeweiligen Komponente (210, 220) bezüglich des sicherheitsrelevanten Systems, insbesondere bezüglich weiterer Komponenten (210, 220) und eine Garantie (G) einer jeweiligen Komponente (210, 220) an das insbesondere sicherheitsrelevante, technische System, insbesondere an weitere Komponenten (210, 220), durch einen Sicherheitsvertrag festgelegt sind, **dadurch gekennzeichnet, dass** in einem Schritt (110) basierend auf wenigstens einer Annahme (A) und basierend auf wenigstens einer Garantie (G) ausführbarer Programm-Code (C) erzeugt wird und in einem weiteren Schritt (120) das insbesondere sicherheitsrelevante, technische System durch Ausführen des Programm-Codes (C) getestet wird.

2. Verfahren (100) nach Anspruch 1, wobei das Erzeugen (110) des Programm-Codes (C) umfasst: Erzeugen von Programm-Code (C) zum Testen wenigstens einer Funktion wenigstens einer Komponente (210, 220) um zu überprüfen, ob die Garantie (G) der Komponente (210, 220) aus dem Sicherheitsvertrag eingehalten wird.

3. Verfahren (100) nach Anspruch 2, wobei das Testen (120) weiter umfasst: Ausführen des Programm-Codes (C) zum Testen der Funktion wenigstens einer Komponente (210, 220).

4. Verfahren (100) nach wenigstens einem der vorhergehenden Ansprüche, wobei das Erzeugen (110) des Programm-Codes ^{©} umfasst: Erzeugen von Programm-Code (C) zum Überwachen wenigstens einer Komponente (210, 220), insbesondere eines Eingangs (230) der Komponente (210, 220), um zu überprüfen, ob die Annahme (A) der Komponente (210, 220) aus dem Sicherheitsvertrag eingehalten wird.

5. Verfahren (100) nach Anspruch 4, wobei das Testen (120) weiter umfasst: Ausführen des Programm-Codes (C) zum Überwachen wenigstens einer Komponente (210, 220), insbesondere zu einer Laufzeit des sicherheitsrelevanten Systems, insbesondere während eines Betriebs des sicherheitsrelevanten Systems.

6. Verfahren (100) nach wenigstens einem der vorhergehenden Ansprüche, wobei das Erzeugen (110) des Programm-Codes (C) automatisch erfolgt.

7. Verfahren (100) nach wenigstens einem der vorhergehenden Ansprüche, wobei das Erzeugen (110) des Programm-Codes (C) weiter umfasst: Erzeugen von Programm-Code (C) zum Testen wenigstens einer Funktion des, insbesondere sicherheitsrelevanten, Systems und/oder zum Überwachen des, insbesondere sicherheitsrelevanten, Systems auf Systemebene.

8. Verfahren (100) nach Anspruch 7, wobei das Testen (120) weiter umfasst: Ausführen des Programm-Codes (C) zum Testen wenigstens einer Funktion des, insbesondere sicherheitsrelevanten, Systems und/oder zum Überwachen des, insbesondere sicherheitsrelevanten, Systems auf Systemebene.

9. Verfahren (100) nach wenigstens einem der vorhergehenden Ansprüche, wobei das Verfahren (100) weiter umfasst: Erzeugen von ausführbarem Programm-Code (C) basierend auf wenigstens einer der folgenden Systemanforderungen: Sicherheit, Komfort, Homologationsaspekten.

10. Vorrichtung zum Testen eines sicherheitsrelevanten Systems, wobei die Vorrichtung zum Ausführen eines Verfahrens (100) nach wenigstens einem der Ansprüche 1 bis 9 ausgebildet ist.

11. Computerprogramm, umfassend ausführbaren Programm-Code (C), wobei der Programm-Code (C) auf einem Sicherheitsvertrag zwischen einem sicherheitsrelevanten System und wenigstens einer Komponente (210, 220) des sicherheitsrelevanten Systems, der Sicherheitsvertrag umfassend wenigstens eine Annahme (A) der Komponente (210, 220) bezüglich des sicherheitsrelevanten Systems und/oder wenigstens eine Garantie (G) der Komponente (210, 220) an das sicherheitsrelevante System, basiert.

## Geänderte Patentansprüche

### Geänderte Patentansprüche gemäss Regel 137(2) EPÜ.

1. Verfahren (100) zum Testen eines, insbesondere sicherheitsrelevanten, technischen Systems, insbesondere umfassend Software- und/oder Hardwarekomponenten, wobei das System durch ein Modell (200) umfassend wenigstens zwei oder mehr Komponenten (210, 220) repräsentiert wird und eine Annahme (A) einer jeweiligen Komponente (210, 220) bezüglich des sicherheitsrelevanten Systems, insbesondere bezüglich weiterer Komponenten (210, 220) und eine Garantie (G) einer jeweiligen Komponente (210, 220) an das insbesondere sicherheitsrelevante, technische System, insbesondere an weitere Komponenten (210, 220), durch einen natürlichsprachlich formulierten Sicherheitsvertrag festgelegt sind, **dadurch gekennzeichnet, dass** in einem Schritt (110) basierend auf wenigstens einer Annahme (A) und basierend auf wenigstens einer Garantie (G) ausführbarer Programm-Code (C) erzeugt wird und in einem weiteren Schritt (120) das insbesondere sicherheitsrelevante, technische System durch Ausführen des Programm-Codes (C) getestet wird.

2. Verfahren (100) nach Anspruch 1, wobei das Erzeugen (110) des Programm-Codes (C) umfasst: Erzeugen von Programm-Code (C) zum Testen wenigstens einer Funktion wenigstens einer Komponente (210, 220) um zu überprüfen, ob die Garantie (G) der Komponente (210, 220) aus dem Sicherheitsvertrag eingehalten wird.

3. Verfahren (100) nach Anspruch 2, wobei das Testen (120) weiter umfasst: Ausführen des Programm-Codes (C) zum Testen der Funktion wenigstens einer Komponente (210, 220).

4. Verfahren (100) nach wenigstens einem der vorhergehenden Ansprüche, wobei das Erzeugen (110) des Programm-Codes (C) umfasst: Erzeugen von Programm-Code (C) zum Überwachen wenigstens einer Komponente (210, 220), insbesondere eines Eingangs (230) der Komponente (210, 220), um zu überprüfen, ob die Annahme (A) der Komponente (210, 220) aus dem Sicherheitsvertrag eingehalten wird.

5. Verfahren (100) nach Anspruch 4, wobei das Testen (120) weiter umfasst: Ausführen des Programm-Codes (C) zum Überwachen wenigstens einer Komponente (210, 220), insbesondere zu einer Laufzeit des sicherheitsrelevanten Systems, insbesondere während eines Betriebs des sicherheitsrelevanten Systems.

6. Verfahren (100) nach wenigstens einem der vorhergehenden Ansprüche, wobei das Erzeugen (110) des Programm-Codes (C) automatisch erfolgt.

7. Verfahren (100) nach wenigstens einem der vorhergehenden Ansprüche, wobei das Erzeugen (110) des Programm-Codes (C) weiter umfasst: Erzeugen von Programm-Code (C) zum Testen wenigstens einer Funktion des, insbesondere sicherheitsrelevanten, Systems und/oder zum Überwachen des, insbesondere sicherheitsrelevanten, Systems auf Systemebene.

8. Verfahren (100) nach Anspruch 7, wobei das Testen (120) weiter umfasst: Ausführen des Programm-Codes (C) zum Testen wenigstens einer Funktion des, insbesondere sicherheitsrelevanten, Systems und/oder zum Überwachen des, insbesondere sicherheitsrelevanten, Systems auf Systemebene.

9. Verfahren (100) nach wenigstens einem der vorhergehenden Ansprüche, wobei das Verfahren (100) weiter umfasst: Erzeugen von ausführbarem Programm-Code (C) basierend auf wenigstens einer der folgenden Systemanforderungen: Sicherheit, Komfort, Homologationsaspekten.

10. Vorrichtung zum Testen eines sicherheitsrelevanten Systems, wobei die Vorrichtung zum Ausführen eines Verfahrens (100) nach wenigstens einem der Ansprüche 1 bis 9 ausgebildet ist.

11. Computerprogramm, umfassend ausführbaren Programm-Code (C), wobei der Programm-Code (C) auf einem Sicherheitsvertrag zwischen einem sicherheitsrelevanten System und wenigstens einer Komponente (210, 220) des sicherheitsrelevanten Systems, der Sicherheitsvertrag umfassend wenigstens eine Annahme (A) der Komponente (210, 220) bezüglich des sicherheitsrelevanten Systems und/oder wenigstens eine Garantie (G) der Komponente (210, 220) an das sicherheitsrelevante System, basiert.
